# FASCICULE DE BREVET EUROPEEN

(11) **EP 3 206 868 B1**
(45) Date de publication et mention de la délivrance du brevet: **04.03.2020**
(21) Numéro de dépôt: 15783989.5
(22) Date de dépôt: 16.10.2015
(51) Int. Cl.: B32B 7/00, B32B 7/12, B32B 27/00, B32B 27/06, B32B 27/08, B32B 27/18, B32B 27/20, B32B 27/30, B32B 27/32, B32B 3/00, B32B 3/26

(54) **FEUILLE POUR LA PROTECTION D'UNE SURFACE DE COFFRAGE, INSTALLATION DE COFFRAGE, PROCÉDÉ DE FABRICATION ET PROCÉDÉ DE MISE EN OEUVRE**
FOLIE ZUM SCHUTZ DER OBERFLÄCHE EINER SCHALUNG, SCHALUNGSINSTALLATION, VERFAHREN ZUR HERSTELLUNG UND VERFAHREN ZUR VERWENDUNG
SHEET FOR PROTECTING A FORMWORK SURFACE, FORMWORK INSTALLATION, METHOD OF PRODUCTION AND METHOD OF USE

(30) Priorité: 17.10.2014 FR 1460018
(43) Date de publication de la demande: 23.08.2017
(73) Titulaire: Pro-t-co, 4200 Saint-Etienne (FR)
(72) Inventeur: GUICHARD, Jérémy, F-42480 La Fouillouse (FR); PLOTON, Michael, F-42000 Saint Etienne (FR); CHALAVON, André, F-43600 Sainte Sigolène (FR)
(74) Mandataire: Lavoix
(86) Numéro de dépôt international: PCT/EP2015/073959
(87) Numéro de publication internationale: WO 2016/059193

(56) Documents cités:
- CN-Y- 201 144 044
- DE-U1- 20 216 955
- FR-A1- 2 644 194
- GB-A- 460 980
- JP-A- H1 119 913
- JP-A- S61 126 002
- US-B1- 6 444 311

## Description

La présente invention concerne une feuille pour la protection d'une surface de coffrage destinée à encadrer un matériau de construction. L'invention concerne également une installation de coffrage équipée avec au moins une telle feuille. L'invention concerne également un procédé de fabrication et un procédé de mise en œuvre d'une telle feuille. Le domaine de l'invention est celui des équipements de coffrage.

De manière connue, une installation de coffrage comprend une enceinte provisoire prévue pour la mise en forme d'un matériau de construction, tel que du béton, armé ou non. Selon d'autres exemples non limitatifs, le matériau peut être du ciment, du plâtre ou du pisé.

Lors de l'opération de coffrage, le béton est versé puis maintenu dans l'enceinte pendant sa prise et son durcissement. L'enceinte est délimitée par des banches pourvues de surfaces coffrantes, généralement en métal, bois ou contre-plaqué, qui sont soumises à de nombreuses contraintes en service. La forme et l'état de surface des surfaces coffrantes définissent la forme et l'état de surface finals du béton, après durcissement et décoffrage.

Lors de l'opération de décoffrage, les surfaces coffrantes sont écartées pour libérer le béton. Si le béton adhère aux surfaces coffrantes, son état de surface et même son intégrité risquent d'être dégradés. Pour faciliter le décoffrage, il est donc important que les surfaces coffrantes présentent un état de surface aussi lisse que possible, dénué d'aspérités. Néanmoins, l'usure des surfaces coffrantes augmente au cours du temps. Ainsi, pour faciliter plus encore le décoffrage, il est connu d'enduire les surfaces coffrantes avec de l'huile ou agent de décoffrage avant de couler le béton dans l'enceinte.

Cependant, les huiles ou agents de décoffrage couramment utilisées sont nocives pour les ouvriers et polluent les sols au voisinage du chantier de construction. Les ouvriers doivent être équipés de protections spécifiques, tel qu'un masque respiratoire, des lunettes et une combinaison de protection, qui ne sont pas toujours utilisés malgré les risques et les coûts correspondants. L'huile ou agent de décoffrage doit être appliquée entre chaque opération de coffrage, ce qui prend un certain temps et demande une attention particulière. Si cette étape est réalisée trop rapidement, de l'huile ou agent de décoffrage risque de couler au sol, ce qui constitue à la fois un gaspillage, et une source de pollution pour les sols et les nappes phréatiques. En outre, certaines parties des surfaces coffrantes risquent de ne pas être recouvertes d'huile ou agent de décoffrage, et donc d'adhérer au béton. Dans le cas d'une construction en béton armé, si de l'huile ou agent de décoffrage est accidentellement appliquée sur les armatures métalliques, l'adhérence entre le béton et les armatures est fortement réduite et l'intégrité du matériau de construction risque d'être dégradée. GB 460 980 décrit une doublure pour coffrage comprenant au moins une feuille de caoutchouc, dont l'une des surfaces est ondulée, rugueuse ou autrement confère à la surface du béton ou autre matériau avec lequel il est employé le contour souhaité, et qui peut être facilement enlevée du béton sans difficulté après usage.

JPH 111 9913 A décrit une feuille appliquée sur une surface de coffrage qui ne nécessite que peu d'efforts de nettoyage et permet un désolidarisation facile des éléments, comprenant une feuille avant constituée d'un matériau plastique ou en caoutchouc souple, et d'une feuille arrière faite avec une substance en caoutchouc magnétique ou en plastique magnétique qui se fixe magnétiquement sur une partie métallique de la surface de coffrage. La feuille avant est responsable d'un très bon état de surface pour la pièce en béton coulée.

Le but de la présente invention est de remédier aux inconvénients ci-dessus.

A cet effet, l'invention a pour objet une feuille pour la protection d'une surface de coffrage, destinée à délimiter un volume de coulée de béton et à encadrer un matériau de construction, caractérisée en ce que la feuille comprend au moins : une couche avant, incluant au moins un matériau polymère et prévue pour être au contact du béton afin de réduire l'usure et la formation de rayures sur la surface de coffrage et de limiter l'adhésion du béton lors du décoffrage ; et une couche adhésive arrière, prévue pour être positionnée contre la surface de coffrage et solidariser la feuille à la surface de coffrage, avant l'amenée du matériau de construction.

Ainsi, l'invention permet de faciliter le décoffrage du matériau de construction, tout en évitant l'utilisation d'huiles ou agents de décoffrage nocifs et polluants. L'état de surface final du matériau est amélioré. Les ouvriers n'ont plus besoin d'équipements de protection contraignants. Les sols du chantier et des alentours ne sont plus pollués par les huiles ou agents de coffrage. La feuille peut être rapidement appliquée sur la surface de coffrage. La même feuille peut être réutilisée pour plusieurs opérations de coffrage successives, par exemple cinq opérations de suite, en restant installée sur la même surface coffrante, ce qui représente un gain de temps et donc d'argent conséquent. De plus, la même feuille résiste au contact du matériau de construction pendant plusieurs jours dans des conditions de chantier (humidité, ensoleillement, abrasion, ...). Un nettoyage rapide (grattage léger avec spatule, éponge abrasive ou chiffon) suffit pour nettoyer la feuille entre deux opérations de coffrage, de manière rapide et pratique en comparaison avec une séquence de nettoyage, grattage et huilage de la surface coffrante. Comme le matériau de construction n'est plus en contact direct avec les surfaces coffrantes, l'invention permet d'éviter une usure prématurée du coffrage, d'améliorer sa durée de vie, et donc de réaliser des économies. La feuille facilite l'écoulement de tout type de béton. Dans le cas d'une construction en béton armé, le risque d'appliquer accidentellement de l'huile ou agent de décoffrage sur les armatures métalliques est supprimé. Dans le cas d'un coffrage métallique, il n'est plus nécessaire de laver intégralement les surfaces coffrantes à très haute pression et de les poncer après un chantier, ce qui représente un gain de temps additionnel lors du stockage des banches et améliore encore leur durée de vie. Dans le cas de différentes tailles de banches, plusieurs feuilles peuvent être utilisées afin de couvrir entièrement la surface de coffrage.

Selon d'autres caractéristiques avantageuses de l'invention, prises isolément ou en combinaison :
- La feuille comprend également une couche témoin d'usure disposée contre la couche avant, du côté de la couche adhésive arrière.
- La couche témoin d'usure inclut au moins un matériau polymère et a une couleur différente de la couche avant.
- La feuille comprend également : une couche intermédiaire, incluant au moins un matériau polymère ou un autre matériau et disposée contre la couche adhésive ; et une couche témoin d'usure interposée entre la couche avant et la couche intermédiaire.
- La couche adhésive est constituée par un film adhésif double face ou un volume de colle.
- La feuille comprend au moins un additif intégré à au moins une couche incluant au moins un matériau polymère, par exemple des pigments métalliques, un additif anti-UVs, un additif élastifiant, un additif rigidifiant, un additif de résistance à la chaleur et/ou un additif antistatique.
- La feuille comporte au moins un trou traversant, pré-percé pour recevoir une clé de maintien.

L'invention concerne également une installation de coffrage équipée avec au moins une feuille telle que mentionnée ci-dessus. L'installation peut être verticale, notamment pour réaliser un mur, et comporter deux surfaces coffrantes disposées en regard. Dans ce cas, l'installation est de préférence équipée d'au moins deux feuilles disposées en regard et délimitant un volume de coffrage du matériau de construction. L'installation peut être horizontale, notamment pour réaliser un sol ou un plafond, et comporter une unique surface coffrante disposée en dessous du volume de coffrage. En fonction des dimensions de l'installation de coffrage, celle-ci peut comporter plusieurs feuilles positionnées sur chaque surface coffrante, délimitant le volume de coffrage. Dans ce cas, les feuilles voisines peuvent être reliées entre elles par des bandes de ruban adhésif, ou tout autre moyen adapté.

L'invention a également pour objet un procédé de fabrication d'une feuille telle que mentionnée ci-dessus. Le procédé de mise en œuvre est caractérisé en ce qu'il comprend au moins les étapes suivantes :
a1) fabriquer la couche avant, de préférence par extrusion ;
a2) appliquer la couche adhésive arrière, notamment par lamination ou enduction, pour former la feuille.

De préférence, la couche avant est en matière plastique. Si la feuille comprend plusieurs couches en matière plastique, ces couches peuvent être fabriquées simultanément lors de l'étape a1), en particulier par extrusion multicouche.

Dans l'étape a2), la couche adhésive peut être constituée par un film adhésif double face (de préférence appliqué par lamination) ou un volume de colle (de préférence appliquée par enduction).

Généralement, l'étape a2) est réalisée après l'étape a1). Autrement dit, la couche adhésive arrière peut être appliquée sur la couche plastique avant, ou sur une autre couche plastique intermédiaire, après la fabrication de l'au moins une couche plastique.

En alternative, l'étape a2) est réalisée simultanément à l'étape a1). Autrement dit, la couche adhésive arrière peut être appliquée sur la couche plastique avant, ou sur une autre couche plastique intermédiaire, pendant la fabrication de l'au moins une couche plastique. Par exemple, la couche adhésive peut être appliquée en ligne pendant l'extrusion.

L'invention a également pour objet un procédé de mise en œuvre d'une feuille telle que mentionnée ci-dessus. Le procédé de mise en œuvre est caractérisé en ce qu'il comprend au moins les étapes suivantes :
b1) positionner la couche adhésive arrière contre la surface de coffrage, de manière à solidariser la feuille à la surface de coffrage, avant l'amenée du matériau de construction ; et
b2) réaliser le coffrage en amenant le matériau de construction au contact de la couche avant.

L'invention sera mieux comprise à la lecture de la description qui va suivre, donnée uniquement à titre d'exemple non limitatif et faite en référence aux dessins annexés sur lesquels :
- la figure 1 est une vue en perspective d'une installation de coffrage, comprenant deux banches pourvues de surfaces de coffrage ;
- la figure 2 est une vue analogue à la figure 1, les surfaces de coffrage étant équipées d'un ensemble de feuilles de protection conformes à l'invention ;
- la figure 3 est une vue de face des feuilles de protection de la figure 2 ;
- la figure 4 est une vue de côté d'une feuille de protection, selon la flèche IV à la figure 3 ; et
- la figure 5 est une vue analogue à la figure 4, montrant une feuille de protection conforme à un deuxième mode de réalisation de l'invention ; et
- la figure 6 est une vue analogue à la figure 4, montrant une feuille de protection conforme à un troisième mode de réalisation de l'invention.

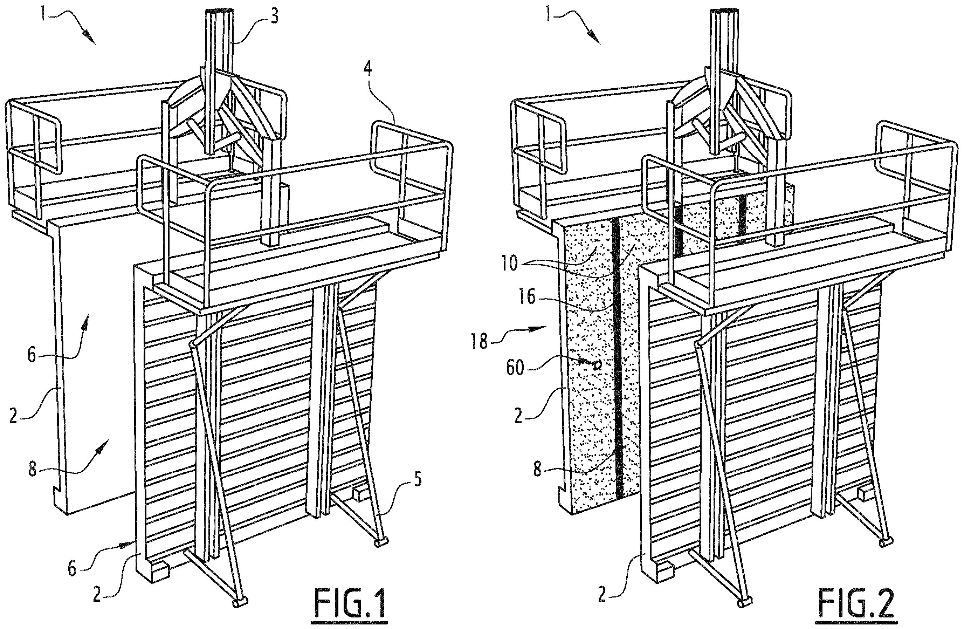

Sur les figures 1 et 2 est représentée une installation de coffrage 1. La figure 1 montre l'installation 1 dépourvue de feuilles de protection 10 conformes à l'invention. La figure 2 montre l'installation 1 conforme à l'invention, pourvue de feuilles de protection 10.

L'installation 1 comprend deux banches 2 disposées en regard, un portique de manutention 3, des barrières de protection 4 et des contrefiches de soutien 5. Les banches 2 sont également appelées panneaux coffrants. Les banches 2 sont munies de surfaces de coffrage 6, ou surfaces coffrantes 6, disposées en regard et délimitant un volume 8 de coulée de béton. Le portique ou compas 3 est prévu pour stabiliser les banches 2 lors du coffrage et permettre leur levage en vis-à-vis lors du décoffrage. Les barrières 4 sont disposées en partie supérieure des banches 2, pour éviter la chute accidentelle d'un opérateur. Les contrefiches 5 sont disposées sur l'arrière des banches 2 pour rigidifier l'ensemble, notamment lors de la coulée de béton dans le volume 8. L'installation 1 peut comporter d'autres dispositifs, non représentés dans un but de simplification.

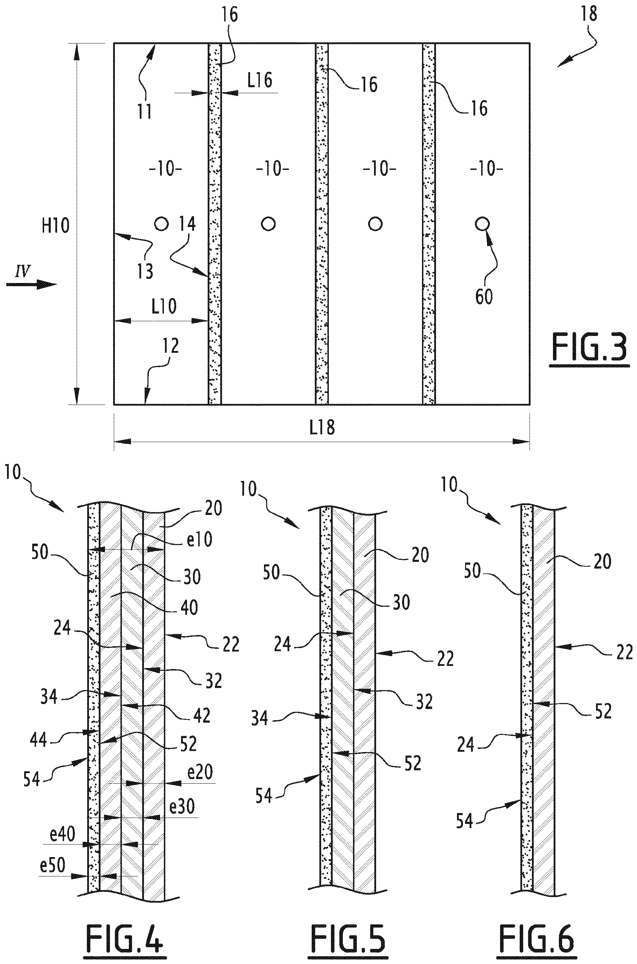

Comme montré aux figures 2 et 3, du fait de leurs dimensions, les surfaces coffrantes 6 sont pourvues de plusieurs feuilles de protection 10 conformes à l'invention. Les feuilles 10 sont disposées côte à côte, avec des bandes 16 de ruban adhésif disposées entre elles. Ensemble, les feuilles 10 et les bandes 16 forment une couverture de protection 18 appliquée sur une même surface 6.

La feuille 10 présente une forme globalement rectangulaire délimitée par un bord supérieur 11, un bord inférieur 12, un bord gauche 13 et un bord droit 14. Les bandes 16 sont positionnées sur la surface 6 pour recouvrir en partie le bord droit 14 d'une première feuille 10 et le bord gauche 13 d'une seconde feuille 10 voisine, de sorte que la couverture 18 recouvre complètement la surface 6. En effet, si certaines parties de la surface 6 ne sont pas recouvertes, deux problèmes risquent de survenir. Premièrement, du béton pourrait s'introduire entre la surface 6 et la feuille 10 lors de la coulée. Deuxièmement, le béton pourrait adhérer à la surface 6 lors du décoffrage. A titre d'exemple, les bandes 16 peuvent être formées par un film adhésif de jointage en polypropylène acrylique. Selon une variante possible mais non préférée, les feuilles 10 peuvent se chevaucher sans bandes 16 interposées entre elles.

La feuille 10 présente une hauteur H10 définie verticalement entre ses bords 11 et 12, une largeur L10 définie horizontalement entre ses bords 13 et 14, et une épaisseur e10 définie horizontalement entre une face avant 22 et une face arrière 54. A titre d'exemples non limitatifs, la hauteur H10 est de l'ordre de 2800 mm (millimètres), la largeur L10 est de l'ordre de 625 mm et l'épaisseur e10 de l'ordre de 0,8 mm. De préférence, l'épaisseur e10 de la feuille 10 est supérieure à 0,2 mm et inférieure à 2 mm. En variante, l'épaisseur e10 peut être inférieure à 0,2 mm ou supérieure à 2 mm. Les bandes 16 présentent une largeur L16, par exemple de l'ordre de 38 mm. L'ensemble présente une largeur L18, par exemple de l'ordre de 4000 mm, correspondant à la largeur de la surface coffrante 3.

La feuille 10 est conçue pour protéger efficacement la surface coffrante 6, destinée à encadrer le matériau de construction. La feuille 10 comprend différentes couches 20, 30, 40 et 50, qui ont des épaisseurs respectives e20, e30, e40 et e50. Les couches 20, 30 et 40 sont réalisées à base de matériau polymère, comportant éventuellement des charges, plastifiants et additifs. Autrement dit, les couches 20, 30 et 40 comprennent au moins un matériau polymère. De préférence, les couches 20, 30 et 40 sont en matière plastique. La couche 20 est la couche avant ou couche externe de la feuille 10. Les couches 30 et 40 sont les couches intermédiaires de la feuille 10. La couche 50 est la couche arrière ou couche interne de la feuille 10, réalisée en matériau adhésif. A titre l'exemple, les épaisseurs e20, e30 et e40 sont de l'ordre de 0,27 mm, tandis que l'épaisseur e50 est de l'ordre de 0,02 mm.

Les couches 20, 30, 40 et 50 présentent différentes faces planes liées entre elles. La couche 20 présente une face avant 22 et une face arrière 24. La couche 30 présente une face avant 32 et une face arrière 34. La couche 40 présente une face avant 42 et une face arrière 44. La couche 50 présente une face avant 52 et une face arrière 54. La face 24 est solidarisée à la face 32, la face 34 est solidarisée à la face 42 et la face 44 est solidarisée à la face 52. La liaison intime entre les couches 20, 30 et 40 est réalisée lors de leur fabrication, tandis que la liaison entre les couches 40 et 50 est réalisée lorsque la couche 50 est appliquée sur la couche 40, notamment par lamination ou enduction.

Les couches 20, 30 et 40 peuvent être en polypropylène, en polyéthylène, en polystyrène, en PVC, en résine, en composite de différents polymères et/ou autres matériaux, en matière plastique d'origine végétale ou toutes autres matières adaptées à l'application visée. De préférence, les couches 20, 30 et 40 sont fabriquées ensemble lors d'une même opération d'extrusion. De préférence également, la feuille 10 est fabriquée au format individuel, et non sous forme d'un rouleau à découper. Les dimensions de la feuille 10 ou d'une série de feuilles 10 peuvent être facilement adaptées aux dimensions de la surface 6 à protéger.

La couche 20 est prévue pour être disposée au contact du matériau de construction, à l'opposé de la surface 6, lors d'une opération de coffrage. Sur l'exemple des figures 2 et 3, les faces avant 22 des différentes feuilles 10 et celles des bandes 16 bordent le béton coulé dans le volume 8. La couche 20 est conçue pour avoir un effet amortisseur lors de la coulée du béton, afin de réduire l'usure et la formation de rayures sur la surface 6. La couche 20 est également conçue pour limiter l'adhésion du béton lors du décoffrage.

La couche 30 est une couche témoin d'usure, réalisée avec une couleur différente des couches 20 et 40, ou au moins différente de la couche 20. La couche 30 assure une fonction de témoin d'usure : après plusieurs utilisations de la feuille 10, la face avant 32 de la couche 30 apparait lorsque la couche 20 est usée ou rayée. L'usure de la feuille 10 peut donc être détectée visuellement par les ouvriers, après un certain nombre d'utilisations, par exemple après quatre ou cinq coffrages successifs. En alternative, la fonction témoin de la couche 30 peut être réalisée par tout moyen adapté à l'application visée, autre qu'une différence de couleur.

La couche 40 est conçue pour faciliter l'adhésion de la couche 50 sur la face 44, par exemple par ajout d'un additif spécifique et/ou par texturage de la face 44 à l'aide d'un ou plusieurs rouleaux métalliques texturés. Dans ce cas, les rouleaux viennent appuyer sur la face 44 lors de l'extrusion ou après l'extrusion. Les couches 30 et/ou 40 peuvent être conçues pour rigidifier ou assouplir légèrement la feuille 10, en fonction du choix des matières plastiques et des épaisseurs e30 et e40.

Par ailleurs, différents additifs peuvent être utilisés dans la composition des couches plastiques 20, 30 et 40, afin de modifier les propriétés de la feuille 10. Par exemple, les couches plastiques (de préférence seulement la couche 40) peuvent intégrer des pigments métalliques pour améliorer le pouvoir magnétique des aimants, lors de la pose de mannequins de forme ou de gabarits au niveau de l'installation de coffrage. Selon un autre exemple, les couches plastiques (de préférence seulement la couche 20 et/ou la couche 40) peuvent comporter un additif de protection contre les UVs (ultraviolets), permettant d'améliorer la résistance de la feuille 10 aux UVs, notamment lors de son stockage. Selon un autre exemple, les couches plastiques (de préférence seulement la couche 20) peuvent comporter un additif élastifiant, pour augmenter leur élasticité et donc leur capacité d'absorption des chocs. Selon un autre exemple, les couches plastiques (de préférence seulement la couche 20) peuvent comporter un additif rigidifiant, pour contrôler leur dureté. Selon un autre exemple, les couches plastiques peuvent comporter un additif pour limiter leur déformation sous l'effet de changements de température, en particulier lors du coffrage ou lors du stockage. Selon un autre exemple, les couches plastiques peuvent comporter un additif antistatique.

La couche adhésive 50 est prévue pour être positionnée contre la surface 6, pour solidariser la feuille 10 à la surface 6, avant l'amenée du matériau de construction dans le volume 8 entre les banches 2, lors de l'opération de coffrage. Plus précisément, la face 54 est prévue pour adhérer à la surface 6. La couche 50 peut se présenter comme un film adhésif double face, ou un volume de colle appliquée sur la couche 40 par enduction. La couche 50 est conçue pour rester accrochée à la couche 40 lorsque la feuille 10 est décollée de la surface 6. En d'autres termes, la face 52 reste accrochée à la face 44 lorsque la face 54 est décollée de la surface 6. De préférence également, la couche 50 s'étend sur l'ensemble de la feuille 10, autrement dit sur toute la face 44 de la couche 40. En alternative, la couche 50 s'étend partiellement sur la feuille 10, autrement dit sur seulement une partie de la couche 40. De préférence, la couche 50 est appliquée sur la couche 40 après l'extrusion des couches 20, 30 et 40. En alternative, la couche 50 peut être appliquée en ligne pendant l'opération d'extrusion. Avantageusement, lors de la fabrication de la feuille 10, la face 54 de la couche 50 peut être recouverte d'un film protecteur pourvu d'une languette.

Sur l'exemple des figures 2 et 3, chacune des feuilles 10 comporte un trou central 60, traversant entre les faces 22 et 54. Les trous 60 sont prévus pour le passage de clés de maintien, c'est-à-dire des pièces transversales disposées dans le volume 8 pour soutenir les banches 2. Les trous 60 sont de préférence pré-percés lors de la fabrication de la feuille 10. En variante non représentée, une même feuille 10 peut comporter plusieurs trous 60.

L'invention a également pour objet un procédé de fabrication d'une feuille 10. Le procédé comprend une étape a1) consistant à fabriquer les couches 20, 30 et 40, de préférence par extrusion. Le procédé comprend également une étape a2) consistant à appliquer la couche 50 sur la couche 40 pour former la feuille 10. Généralement, l'étape a2) est réalisée après l'étape a1). En alternative, l'étape a2) est réalisée simultanément à l'étape a1). Le procédé peut également comprendre une étape a3), consistant à marquer la feuille 10 avec un motif particulier, par exemple des formes, dessins, marques de commerce, logos ou toute autre création graphique. En particulier, le motif est marqué sur la couche 20, par exemple en passant la feuille 10 sous presse ou sous rouleau. Ainsi, le motif pourra être imprimé à la surface du béton lors de l'opération de coffrage.

L'invention a également pour objet un procédé de mise en œuvre d'une feuille 10. Le procédé comprend une étape b1), consistant à positionner la couche 50 contre la surface 6, de manière à solidariser la feuille 10 et la surface 6, avant la coulée du béton. Le procédé comprend ensuite une étape b2), consistant à réaliser le coffrage en coulant le béton au contact de la couche 20. Le procédé comprend également une étape de décoffrage b3), réalisée après l'étape b2), consistant à décoffrer le béton ayant sa forme finale. Le procédé peut comprend une étape b0), réalisée avant l'étape b1), consistant à pré-percer le trou traversant 60 et/ou découper les bords 11, 12, 13 et 14 de la feuille 10 en fonction des dimensions de la surface 6. Le procédé peut également comprendre une étape b4), réalisée entre les étapes b1) et b2), consistant à positionner des bandes de jointage 16 entre des feuilles 10 voisines. Le procédé peut également comprendre d'autres étapes préparatoires avant l'étape de coffrage b2), ainsi que d'autres étapes après les étapes b2) et b3).

Dans le cadre de l'invention, le matériau de construction utilisé pour le coffrage peut être du béton ou tout autre matériau adapté à l'application visée. L'opération de coffrage permet de construire des murs, des planchers ou tout autre type d'éléments, par exemple des barrières, des canalisations ou des carreaux en béton.

D'autres modes de réalisation de l'invention sont décrits ci-après en référence aux figures 5 et 6. Dans ces modes de réalisation, les éléments constitutifs de la feuille 10 sont comparables à ceux du premier mode de réalisation décrit plus haut et, dans un but de simplification, portent les mêmes références numériques.

Sur la figure 5, la feuille 10 comprend une couche plastique avant 20, une couche témoin 30 et une couche adhésive 50, mais pas de couche plastique intermédiaire 40. La couche adhésive 50 est appliquée sur la couche témoin 30.

Sur la figure 6, la feuille 10 comprend une couche plastique avant 20 et une couche adhésive 50. Dans ce mode de réalisation simplifié, la couche adhésive 50 est appliquée sur la couche plastique 20

Par ailleurs, la feuille 10 peut être conformée différemment des figures 2 à 6 sans sortir du cadre de l'invention. En particulier, la feuille 10 peut présenter des formes et des dimensions différentes en fonction de l'application visée.

Sur l'exemple des figures 1 et 2, les surfaces coffrantes 6 sont verticales et sensiblement planes. En variante non représentée, une surface coffrante peut être horizontale ou inclinée. Selon une autre variante, une surface coffrante peut être concave ou convexe, et non plane.

Selon une autre variante non représentée, la feuille 10 peut être thermoformée pour lui donner une configuration particulière adaptée à l'application visée. Une grande variété de formes du matériau de construction peut ainsi être obtenue après coffrage.

Quel que soit le mode de réalisation, la feuille 10 comprend au moins : une couche plastique avant 20, incluant au moins un matériau polymère et prévue pour être au contact du matériau de construction ; et une couche adhésive arrière 50, prévue pour être positionnée contre la surface de coffrage 6 et solidariser la feuille 10 à la surface de coffrage 6, avant l'amenée du matériau de construction.

En outre, les caractéristiques techniques des différents modes de réalisation et variantes mentionnés ci-dessus peuvent être, en totalité ou pour certaines d'entre elles, combinées entre elles. Ainsi, la feuille 10 peut être adaptée en termes de coût et de performance.

## Revendications

1. Feuille (10) pour la protection d'une surface de coffrage (6), la surface de coffrage (6) étant destinée à délimiter un volume (8) de coulée de béton et à encadrer un matériau de construction, le matériau de construction étant du béton coulé dans le volume (8), **caractérisée en ce que** la feuille (10) comprend au moins :
- une couche avant (20), incluant au moins un matériau polymère, prévue pour être au contact du béton afin de réduire l'usure et la formation de rayures sur la surface de coffrage (6) et de limiter l'adhésion du béton lors du décoffrage ; et
- une couche adhésive arrière (50), prévue pour être positionnée contre la surface de coffrage (6) et solidariser la feuille (10) à la surface de coffrage (6), avant l'amenée du béton.

2. Feuille (10) selon la revendication 1, **caractérisée en ce qu'**elle comprend également une couche témoin d'usure (30) disposée contre la couche avant (20), du côté de la couche adhésive arrière (50).

3. Feuille (10) selon la revendication 2, **caractérisée en ce que** la couche témoin d'usure (30) inclut au moins un matériau polymère et a une couleur différente de la couche avant (20, 40).

4. Feuille (10) selon l'une des revendications précédentes, **caractérisée en ce qu'**elle comprend également :
- une couche intermédiaire (40), incluant au moins un matériau polymère ou un autre matériau et disposée contre la couche adhésive (50) ; et
- une couche témoin d'usure (30) interposée entre la couche avant (20) et la couche intermédiaire (40).

5. Feuille (10) selon l'une des revendications précédentes, **caractérisée en ce que** la couche adhésive (50) est constituée par un film adhésif double face ou un volume de colle.

6. Feuille (10) selon l'une des revendications précédentes, **caractérisée en ce qu'**elle comprend au moins un additif intégré à au moins une couche (20, 30, 40) incluant au moins un matériau polymère, par exemple des pigments métalliques, un additif anti-UVs, un additif élastifiant, un additif rigidifiant, un additif de résistance à la chaleur et/ou un additif antistatique.

7. Feuille (10) selon l'une des revendications précédentes, **caractérisée en ce qu'**elle comporte au moins un trou traversant (60), pré-percé pour recevoir une clé de maintien.

8. Installation de coffrage (1), **caractérisée en ce qu'**elle est équipée avec au moins une feuille (10) selon les revendications 1 à 7.

9. Procédé de fabrication d'une feuille (10) selon l'une des revendications 1 à 7, **caractérisé en ce qu'**il comprend au moins les étapes suivantes :
a1) fabriquer la couche avant (20), de préférence par extrusion ;
a2) appliquer la couche adhésive arrière (50), notamment par laminage ou enduction, pour former la feuille (10).

10. Procédé de fabrication d'une feuille (10) selon la revendication 9, **caractérisé en ce que** la couche avant (20) est fabriquée par extrusion et **en ce que** la couche adhésive arrière (50) est appliquée en ligne pendant l'extrusion.

11. Procédé de mise en œuvre d'une feuille (10) selon l'une des revendications 1 à 7, **caractérisé en ce qu'**il comprend au moins les étapes suivantes :
b1) positionner la couche adhésive arrière (50) contre la surface de coffrage (6), de manière à solidariser la feuille (10) à la surface de coffrage (6), avant l'amenée du béton ; et
b2) réaliser le coffrage en amenant le béton au contact de la couche avant (20).

## Patentansprüche

1. Folie (10) zum Schutz einer Schalungsoberfläche (6), wobei die Schalungsoberfläche (6) zur Begrenzung eines Gussbetonvolumens (8) und zur Einfassung eines Baumaterials dient, wobei das Baumaterial in das Volumen (8) gegossener Beton ist, **dadurch gekennzeichnet, dass** die Folie (10) zumindest Folgendes umfasst:
- eine zur Anlage an dem Beton vorgesehene vordere Schicht (20) mit mindestens einem polymeren Material zur Verringerung eines Verschleißes und einer Streifenbildung auf der Schalungsoberfläche (6) und zur Einschränkung der Haftung des Betons bei der Ausschalung; und
- eine zur Anordnung an der Schalungsoberfläche (6) vorgesehene haftfähige hintere Schicht (50) zur Befestigung der Folie (10) an der Schalungsoberfläche (6) vor der Einbringung des Betons.

2. Folie (10) nach Anspruch 1, **dadurch gekennzeichnet, dass** die Folie des Weiteren eine Verschleißindikatorschicht (30) umfasst, die auf der der haftfähigen hinteren Schicht (50) zugewandten Seite der vorderen Schicht (20) angeordnet ist.

3. Folie (10) nach Anspruch 2, **dadurch gekennzeichnet, dass** die Verschleißindikatorschicht (30) mindestens ein polymeres Material umfasst und eine andere Farbe aufweist als die vordere Schicht (20, 40).

4. Folie (10) nach einem der vorhergehenden Ansprüche, **dadurch gekennzeichnet, dass** die Folie des Weiteren Folgendes umfasst:
- eine Zwischenschicht (40) mit mindestens einem polymeren Material oder einem anderen Material, die an der haftfähigen Schicht (50) angeordnet ist; und
- eine Verschleißindikatorschicht (30), die zwischen der vorderen Schicht (20) und der Zwischenschicht (40) angeordnet ist.

5. Folie (10) nach einem der vorhergehenden Ansprüche, **dadurch gekennzeichnet, dass** die haftfähige Schicht (50) durch ein doppelseitiges Klebeband oder ein Klebervolumen gebildet ist.

6. Folie (10) nach einem der vorhergehenden Ansprüche, **dadurch gekennzeichnet, dass** die Folie mindestens ein Additiv, wie zum Beispiel Metallpigmente, ein UV-Schutz-Additiv, einen Elastifizierer, ein Versteifungsmittel, ein die Hitzebeständigkeit steigerndes Additiv und/oder ein Antistatikum, umfasst, das in mindestens einer ein polymeres Material umfassenden Schicht (20, 30, 40) enthalten ist.

7. Folie (10) nach einem der vorhergehenden Ansprüche, **dadurch gekennzeichnet, dass** die Folie mindestens ein vorgebohrtes Durchgangsloch (60) zur Aufnahme eines Halteschlüssels aufweist.

8. Schalungsanordnung (1), **dadurch gekennzeichnet, dass** die Schalungsanordnung mit mindestens einer Folie (10) nach den Ansprüchen 1 bis 7 versehen ist.

9. Verfahren zur Herstellung einer Folie (10) nach einem der Ansprüche 1 bis 7, **dadurch gekennzeichnet, dass** das Verfahren mindestens die folgenden Schritte umfasst:
a1) Herstellen der vorderen Schicht (20), vorzugsweise durch Extrusion;
a2) Aufbringen der haftfähigen hinteren Schicht (50), insbesondere durch Laminierung oder Beschichtung, zur Ausbildung der Folie (10).

10. Verfahren zur Herstellung einer Folie (10) nach Anspruch 9, **dadurch gekennzeichnet, dass** die vordere Schicht (20) durch Extrusion hergestellt wird und dass die haftfähige hintere Schicht (50) während der Extrusion inline aufgebracht wird.

11. Verfahren zur Verwendung einer Folie (10) nach den Ansprüchen 1 bis 7, **dadurch gekennzeichnet, dass** das Verfahren mindestens die folgenden Schritte umfasst:
b1) Positionieren der haftfähigen hinteren Schicht (50) an der Schalungsoberfläche (6) zur Befestigung der Folie (10) an der Schalungsoberfläche (6) vor der Einbringung des Betons; und
b2) Ausbildung der Schalung durch Einbringen des Betons unter Anlage an der vorderen Schicht (20).

## Claims

1. A sheet (10) for protecting a formwork surface (6), the formwork surface (6) being intended to define a concrete casting volume and to surround a construction material, the building material being concrete in volume (8) **characterized in that** the sheet (10) comprises at least:
- a front layer (20), including at least one polymer material and provided to be in contact with the concrete so as to reduce wear and the formation of grooves on the formwork surface (6) and to limit adhesion of the concrete during removal of the formwork; and
- a rear adhesive layer (50), provided to be positioned against the formwork surface (6) and to secure the sheet (10) to the formwork surface (6), before the concrete is introduced.

2. The sheet (10) according to claim 1, **characterized in that** it also comprises a wear indicator layer (30) positioned against the front layer (20), on the side of the rear adhesive layer (50).

3. The sheet (10) according to claim 2, **characterized in that** the wear indicator layer (30) includes at least one polymer material and has a different color from the front layer (20, 40).

4. The sheet (10) according to one of the preceding claims, **characterized in that** it also comprises:
- an intermediate layer (40), including at least one polymer material or another material and positioned against the adhesive layer (50); and
- a wear indicator layer (30) inserted between the front layer (20) and the intermediate layer (40).

5. The sheet (10) according to one of the preceding claims, **characterized in that** the adhesive layer (50) is made up of a double-sided adhesive film or a volume of glue.

6. The sheet (10) according to one of the preceding claims, **characterized in that** it comprises at least one additive integrated into at least one layer (20, 30, 40) including at least one polymer material, for example metal pigments, an anti-UV additive, an elasticator additive, a stiffening additive, a heat resistance additive and/or an antistatic additive.

7. The sheet (10) according to one of the preceding claims, **characterized in that** it includes at least one through hole (60), predrilled to receive a maintaining key.

8. A formwork installation (1), **characterized in that** it is equipped with at least one sheet (10) according to claims 1 to 7.

9. A method for producing a sheet (10) according to one of claims 1 to 7, **characterized in that** it comprises at least the following steps:
a1) producing the front layer (20), preferably by extrusion;
a2) applying the rear adhesive layer (50), in particular by lamination or coating, to form the sheet (10).

10. A method for producing a sheet (10) according to claim 9, **characterized in that** the front layer (20) is manufactured by extrusion and **in that** the rear adhesive layer (50) is applied on-line during the extrusion.

11. A method for using a sheet (10) according to one of claims 1 to 7, **characterized in that** it comprises at least the following steps:
b1) positioning the rear adhesive layer (50) against the formwork surface (6), so as to secure the sheet (10) to the formwork surface (6), before introducing the concrete; and
b2) producing the formwork by bringing the concrete into contact with the front layer (20).
